# EUROPÄISCHE PATENTSCHRIFT

(11) **EP 0 641 987 B1**
(45) Veröffentlichungstag und Bekanntmachung des Hinweises auf die Patenterteilung: **21.05.1997**
(21) Anmeldenummer: 94112167.5
(22) Anmeldetag: 04.08.1994
(51) Int. Cl.: F28F 13/08, F28D 7/08

(54) **Röhrenwärmeaustauscher**
Shell-and-tube exchanger
Echangeur de chaleur tubulaire

(30) Priorität: 08.09.1993 DE 4330361
(43) Veröffentlichungstag der Anmeldung: 08.03.1995
(73) Patentinhaber: Vetter, Richard, D-31226 Peine (DE)
(72) Erfinder: Vetter, Richard, D-31226 Peine (DE)
(74) Vertreter: Depmeyer, Lothar

(56) Entgegenhaltungen:
- EP-A- 0 488 096
- GB-A- 2 137 330

## Beschreibung

Die Erfindung bezieht sich auf einen Röhrenwärmetauscher gemäß den Ansprüchen 1 oder 10.

Diese Kondensatansammlungen sollen zu einer Abkühlung der Verbrennungsgase beitragen, zugleich aber eine Wärmespeicherfunktion ausüben. Um diese Ansammlungen innerhalb der Rohre bilden zu können, sind nach bekannten Vorschlägen ( EP-A- 0 488 096 ) in den Rohren staudammähnliche Vorsprünge vorgesehen; es ist aber auch möglich, den Kondensatstau durch eine Neigung der Rohre herbeizuführen. Während diese Vorsprünge besondere, nicht leicht auszuführenden Manipulationen innerhalb der Rohre voraussetzen, sind den Neigungen der Rohrkörper meist aus rein räumlichen Gründen Grenzen gesetzt.

Der Erfindung liegt die Aufgabe zugrunde, einen Röhrenwärmetauscher vorzuschlagen, der nur vergleichsweise einfache technische Mittel voraussetzt und zugleich eine günstige räumliche Unterbringung gestattet.

Die Lösung dieser Aufgabe erfolgt erfindungsgemäß durch die Merkmale des Anspruchs 1 oder des Anspruchs 10.

Aufgrund einer solchen Ausbildung kann sich je nach dem aufgezeigten Höhenunterschied eine mehr oder weniger tiefe Kondensatmenge ansammeln, die allerdings über die Ableitrohre abfliessen könnte, wenn zu viel Kondensat angefallen sein sollte. Diese Ausbildung verwirklicht man am besten mit Rohren unterschiedlichen Durchmessers, indem für die Rohre zum Ansammeln des Kondensats grössere Rohre benutzt werden und die im Durchmesser kleineren Zu- und Ableitrohre über Reduzierstücke mit den grösseren Rohren verbunden werden, wobei es zweckmässig ist, die kleineren und die grösseren Rohre so zu verlegen, dass sie alle praktisch in einer waagerechten Ebene liegen.

Zweckmässigerweise wählt man bei Rohren im vorgenannten Sinne ein Durchmesserverhältnus von etwa 1 : 1,5.

Die so gewählte Verlegung der Rohre ist platzsparend und mit einfachen Mitteln des Rohrleitungsbaus, insb. aber bei Kunststoffrohren, zu verwirklichen, zumal alle Rohre praktisch mit ihren oberen Kanten in einer Ebene angeordnet werden können, wodurch glatte, ebene Begrenzungen des Wärmetauschers z.B. dessen Verlegung auch in Wänden oder Fussböden ohne weiteres möglich sind.

Die unterschiedlich grossen Rohre sind auch günstig für die Ableitung der Verbrennungs- bzw. Abgase; sind die grösseren Rohre mit dem Kondensat teilweise angefüllt, so haben sie einen lichten Durchgangsquerschnitt, der praktisch dem Durchgangsquerschnitt der kleineren Rohre für den Zufluss und das Ableiten entspricht.

Weitere Einzelheiten der Erfindung werden anhand der Zeichnung erläutert, in der ein Ausführungsbeispiel der Erfindung dargestellt ist.

Es zeigen :
Fig. 1 einen Röhrenwandheizkörper in schaubildlicher Darstellung,
Fig. 2 eine Einzelheit aus Fig. 1, nämlich den Heizkörpereintritt in der Seitenansicht,
Fig. 3 eine Austrittsstelle eines Röhrenwärmeaustauschers z.B. für den Heizkörper gemäss Fig. 1 und
Fig. 4 einen gegenüber Fig. 1 abgewandelten Heizkörper für die Verwendung als Bodenheizkörper z.B. für den Einbau in Decken und Böden von Wohnhäusern, Fabrikationsräumen und dgl..

Der Röhrenwärmeaustauscher besteht in seiner Gesamtheit aus Kunststoffrohren 1, 2 und Reduzierelementen 3, die ebenfalls aus Kunststoff gefertigt sind. Die Rohre und Elemente werden zum Zusammenbau zusammengesteckt; aus diesen Gründen sind die Anschlusstellen 4 muffenartrig ausgeführt, und die Abdichtung geschieht dabei durch Dichtungsringe 5.

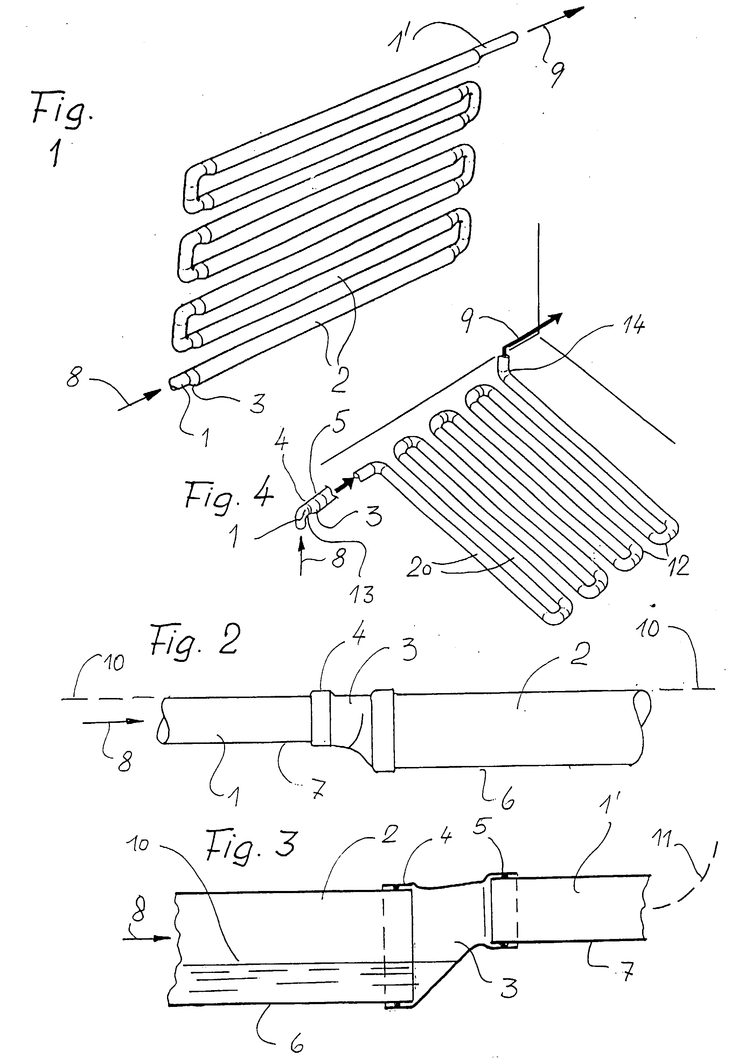

Die Rohre 1, 2 könnenn frei verlegt, aber auch in Wände oder Decken eingelasssen z.B. einbetoniert sein. Es sind Verlegungen in Schlangenlinien gemäss Fig. 1 möglich, aber auch in der Weise, dass sich alle Rohre im wesentlichen in einer Ebene befinden, um so z.B. Heizkörper für waagerechte Böden zu schaffen.

Die Besonderheit des erfindungsgemässen Wärmeaustauschers besteht darin, dass seine Rohre von Verbrennungsgasen - nach dem Ausführungsbeispiel von den Abgasen eines Warmwasserheizkessels - gespeist werden, und zwar mit ein so geringen Temperatur, z.B. einer Temperatur nahe oberhalb des Taupunktes, dass sich innerhalb der Rohre Kondensat bildet, welches gesammelt wird, um einerseits eine verbesserte Abkühlung der Abgase zu erzielen und andererseits das warme Kondensat zur Wärmespeicherung heranziehen zu können. Um dies effektiv ausführen zu können, werden unterschiedlich grosse Rohre benutzt.

Die Verbrennungsgase werden über die Rohre 1 zugeleitet und durch die Rohre 1' abgeleitet; sie haben z.B. einen Durchmesser von 10 cm. Zwischen diesen Rohren 1 befinden sich die Rohre 2, die z.B. einen Durchmesser von etwa 15 cm aufweisen. Dabei erfolgt der Übergang durch die Reduzierelemente 3. Wichtig ist dabei, dass die Sohle 6 ( tiefste Stelle ) der Rohre 2 tiefer liegt als die Sohle 7 der Rohre 1. Zudem sind die Rohre 2 waagerecht verlegt. Dadurch liegen die unteren Abschnitte der Rohre 2 insgesamt tiefer als die Rohre 1. Damit kann sich in den Rohren 2 Kondensat sammeln, und das im Sinne der Pfeile 8 zuströmende und im Sinne der Pfeile 9 abströmende Verbrennungsgas findet eine breite, vom Kondensat gebildete freie Fläche, die zu einer weiteren Kondensatbildung bzw. Abkühlung führt. Diese Fläche ist mit 10 bezeichnet. Sollte der Kondensatspiegel ansteigen, so kann das Kondensat über die Rohre 1' abfliessen.

Wenn die Rohre 2 z.B. als Heizelemente für waagerechte Böden dienen sollen, so müssen bei einer Verlegung in Schlangenlinien alle Rohre 2 auf einer Ebene bzw. mit ihrer Sohle 6 in einer waagerechten Ebene liegen, um auch die Verlegung des Tauschers zu vereinfachen und den Platzanspruch zu verringern. Zudem ist es auch zweckmässig, dass die Rohre 1 und 1' in Bezug auf die Rohre 2 so angeordnet werden, dass die höchsten Stellen aller Rohre praktisch in einer Ebene liegen, wie dies auch aus Fig. 2 erkennbar ist; die gemeinsame, oben gelegene Ebene ist mit 10 bezeichnet.

Es sei bemerkt, dass man die unterschiedlich grossen Rohre auch so bemisst und eine solche Stufung wählt, dass in den Rohren 2 im völlig angefüllten Zustand ( Spiegel 10 in Höhe der Sohle 7 ) immer noch ein freier Durchgangsquerschnitt in einer Grösse vorhanden sein soll, der zumindest im wesentlichen dem freien Durchgangsquerschnitt der Rohre 1 entsprechen soll.

Es sei auch vermerkt, dass in der Ableitung der Verbrennungsgase Bögen z.B. im Sinne der Linie 11 vorgesehen sein können.

Bei dem Heizkörper gemäss Fig. 4 sind die mit den Rohren 2 vergleichbaren Rohre 20 s-förmig verlegt, durch Krümmer 12 gleichen Durchmessers miteinander verbunden und alle in einer Ebene angeordnet. Auch hier werden die Abgase im Sinne des Pfeiles 8 zugeführt, jedoch hier von unten über einen Krümmer 13 zugeleitet und dann in die Waagerechte übergeleitet, worauf sich ein Reduzierelement 3 anschliesst, um so wiederum die in den Fig. 2 und 3 aufgezeigten Höhen- und Durchmesserverhältnisse zu schaffen. Der waagerechte Teil des Krümmers 13 entspricht also dem in Fig. 2 gezeigten Rohr 1. Am Ende des Heizkörpers gemäss Fig. 4 kann auf ein Reduzierelement 3 verzichtet werden, weil hier ein nach oben weisender Krümmer 14 vorgesehen ist, der einen Kondensatstau zulässt, einen ungewollten Abfluss aufgrund seines Anstiegs also vermeidet.

## Patentansprüche

1. Röhrenwärmetauscher, bestehend aus einem waagerechten Zuleitrohr (1), einem waagerechten Ableitrohr (1') und zwischen den Zu- und Ableitrohren (1, 1') angeordneten und mit ihnen verbundenen waagerechten Rohren (2), bei dem die Rohre von Verbrennungsgasen, vorzugsweise von den Verbrennungsgasen von Warmwasserheizkesseln durchströmt sind, wobei sich innerhalb eines oder mehrerer Rohre (2) Kondensatansammlungen befinden, dadurch gekennzeichnet, daß die waagerechten Sohlen (7) der Zu- und Ableitrohre (1, 1') für die Verbrennungsgase höher angeordnet sind im Vergleich zu der waagerechten Sohle (6) der an sie anschließenden Rohre (2).

2. Tauscher nach Anspruch 1, dadurch gekennzeichnet, dass die Zu- und Ableitrohre (1) einerseits und die anderen Rohre (2) andererseits einen unterschiedlichen Durchmesser haben und die Zu- und Ableitrohre einen kleineren Durchmesser aufweisen.

3. Tauscher nach Anspruch 2, dadurch gekennzeichnet, das sich die Durchmesser etwa verhalten wie 1 : 1,5.

4. Tauscher nach Anspruch 1, dadurch gekennzeichnet, dass die Sohle (6) der zwischen den Zu- und Ableitrohren (1) befindlichen Rohre (2) bei mehreren nebeneinander liegenden Rohren (2) praktisch in einer Ebene angeordnet ist.

5. Tauscher nach Anspruch 1, dass der Übergang zwischen den Rohren (1,2) durch Reduzierstücke (3) herbeigeführt ist.

6. Tauscher nach Anspruch 1, dadurch gekennzeichnet, dass die Rohre (1,2) gegeneinander höhenversetzt angeordnet sind.

7. Tauscher nach den Ansprüche 1 oder 6, dadurch gekennzeichnet, dass die am weitesten oben gelegenen Teile der Rohre (1,2) in einer Ebene (10) angeordnet sind.

8. Tauscher nach Anspruch 1, dadurch gekennzeichnet, dass alle Rohre (1,2) und deren Verbindungen (3) aus Kunststoff bestehen und durch Zusammenstecken verbunden sind.

9. Tauscher nach Anspruch 1, dadurch gekennzeichnet, dass die Grösse der Rohre (1,2) so gewählt und deren Versetzung so ausgebildet ist, dass der lichte Durchgangsquerschnitt durch die Rohre (2) mit der Kondensatansammlung zumindest im wesentlichen so gross ist wie der Durchgangsquerschnitt der Zu- bzw. Ableitrohre (1), wenn die Rohre (2) ihre größtmögliche Menge Kondensat aufgenommen haben.

10. Röhrenwärmetauscher, bestehend aus einem waagerechten Zuleitrohr (13), einem Ableitrohr (14) und zwischen den Zu- und Ableitrohren (13, 14) angeordneten und mit ihnen verbundenen S-förmig verlegten, waagerechten Rohren (20), bei dem die Rohre (20) von Verbrennungsgasen, vorzugsweise von den Verbrennungsgasen von Warmwasserheizkesseln durchströmt sind, wobei sich innerhalb eines oder mehrerer Rohre (20) Kondensatansammlungen befinden, dadurch gekennzeichnet, daß das Zuleitrohr (13) ein Reduzierstück (3) aufweist in der Weise, daß die waagerechte Sohle des Zuleitrohrs (13) höher angeordnet ist im Vergleich zu der waagerechten Sohle (6) der an sie anschließenden Rohre (20) und daß das Ableitrohr (14) ein nach oben weisender Krümmmer ist.

## Claims

1. Heat exchanger having pipes, comprising a horizontal inlet pipe (1), a horizontal outlet pipe (1') and horizontal pipes (2), which are disposed between the inlet and outlet pipes (1, 1') and are connected thereto, wherein the pipes are traversed by combustion gases, preferably by the combustion gases of hot-water boilers, accumulations of condensate being situated internally of one or more pipes (2), characterised in that the horizontal bases (7) of the inlet and outlet pipes (1, 1') for the combustion gases are disposed at a higher level than the horizontal base (6) of the pipes (2) communicating therewith.

2. Exchanger according to claim 1, characterised in that the inlet and outlet pipes (1), on the one hand, and the other pipes (2), on the other hand, have a variable diameter, and the inlet and outlet pipes have a smaller diameter.

3. Exchanger according to claim 2, characterised in that ratios of the diameters are substantially 1 : 1.5.

4. Exchanger according to claim 1, characterised in that the base (6) of the pipes (2), which are disposed between the inlet and outlet pipes (1), is disposed substantially in one plane when there are a plurality of pipes (2) adjacent one another.

5. Exchanger according to claim 1, characterised in that the transition between the pipes (1, 2) is caused by reducing elements (3).

6. Exchanger according to claim 1, characterised in that the pipes (1, 2) are disposed so as to be vertically offset from one another.

7. Exchanger according to claims 1 or 6, characterised in that the uppermost portions of the pipes (1, 2) are disposed in one plane (10).

8. Exchanger according to claim 1, characterised in that all of the pipes (1, 2) and their connections (3) are formed from plastics material and are joined by being fitted together.

9. Exchanger according to claim 1, characterised in that the size of the pipes (1, 2) is so selected, and their offset arrangement is so configured, that the unobstructed cross-sectional area of passage through the pipes (2) with the accumulation of condensate is at least substantially as large as the cross-sectional area of passage of the inlet and outlet pipes (1) when the pipes (2) have received their maximum quantity of condensate.

10. Heat exchanger having pipes, comprising a horizontal inlet pipe (13), an outlet pipe (14) and horizontal pipes (20), laid in an S-shaped configuration, which are disposed between the inlet and outlet pipes (13, 14) and are connected thereto, wherein the pipes (20) are traversed by combustion gases, preferably by the combustion gases of hot-water boilers, accumulations of condensate being situated internally of one or more pipes (20), characterised in that the inlet pipe (13) includes a reducing element (3) in such a manner that the horizontal base of the inlet pipe (13) is disposed at a higher level than the horizontal base (6) of the pipes (20) communicating therewith, and in that the outlet pipe (14) is an upwardly bent portion.

## Revendications

1. Echangeur de chaleur tubulaire constitué d'un tube (1) d'alimentation horizontal, d'un tube (1') d'évacuation horizontal et de tubes (2) horizontaux montés entre les tubes (1, 1') d'alimentation et d'évacuation et reliés à ces tubes, dans lequel il passe dans les tubes des gaz de combustion, de préférence les gaz de combustion de chaudières de chauffage à eau chaude, des accumulations de produit de condensation se trouvant à l'intérieur d'un tube (2) ou de plusieurs tubes (2), caractérisé en ce que les bases (7) horizontales des tubes (1, 1') d'alimentation et d'évacuation destinés aux gaz de combustion sont montées plus haut que la base (6) horizontale des tubes (2) s'y raccordant.

2. Echangeur suivant la revendication 1, caractérisé en ce que les tubes (1) d'alimentation et d'évacuation d'une part et les autres tubes (2) d'autre part ont un diamètre différent et en ce que les tubes d'alimentation et d'évacuation ont un diamètre plus petit.

3. Echangeur suivant la revendication 2, caractérisé en ce que les diamètres sont dans un rapport d'environ 1 : 1,5.

4. Echangeur suivant la revendication 1, caractérisé en ce que la base des tubes (2) se trouvant entre les tubes (1) d'alimentation et d'évacuation se trouve pratiquement dans un plan lorsque plusieurs tubes (2) se trouvent côte-à-côte.

5. Echangeur suivant la revendication 1, caractérisé en ce que la transition entre les tubes (1, 2) est produite par des raccords (3) réducteurs.

6. Echangeur suivant la revendication 1, caractérisé en ce que les tubes (1, 2) sont montés en étant décalés en hauteur les uns par rapport aux autres.

7. Echangeur suivant les revendications 1 ou 6, caractérisé en ce que les parties des tubes (1, 2) placées le plus haut sont disposées dans un plan (10).

8. Echangeur suivant la revendication 1, caractérisé en ce que tous les tubes (1, 2) et leurs liaisons (3) sont en matière plastique et sont reliés en étant emmanchés les uns aux autres.

9. Echangeur suivant la revendication 1, caractérisé en ce que la dimension des tubes (1, 2) et leur décalage sont choisis de manière que la petite section transversale de passage des tubes (2) comportant l'accumulation de produit de condensation soit sensiblement aussi grande que la section transversale de passage des tubes (1) d'alimentation et d'évacuation quand les tubes (2) ont reçu la plus grande quantité possible de produit de condensation qu'ils peuvent recevoir.

10. Echangeur de chaleur tubulaire, constitué d'un tube (13) d'alimentation horizontal, d'un tube (14) d'évacuation horizontal et de tubes (20) horizontaux posés de manière sinueuse, montés entre les tubes (13, 14) d'alimentation et d'évacuation et reliés à ces tubes, dans lequel il passe dans les tubes (20) des gaz de combustion, de préférence les gaz de combustion de chaudières de chauffage à eau chaude, des accumulations de produit de condensation se trouvant à l'intérieur d'un tube (20) ou de plusieurs tubes (20), caractérisé en ce que le tube (13) d'alimentation comporte un raccord (3) réducteur, de sorte que la base horizontale du tube (13) d'alimentation est montée plus haut que la base (6) des tubes (20) qui s'y raccordent, et en ce que le tube (14) d'alimentation est un raccord coudé tourné vers le haut.
